# EUROPEAN PATENT SPECIFICATION

(11) **EP 2 546 533 B1**
(45) Date of publication and mention of the grant of the patent: **15.02.2017**
(21) Application number: 12173569.0
(22) Date of filing: 26.06.2012
(51) Int. Cl.: F16B 35/06

(54) **Screw**
Schraube
Vis

(30) Priority: 12.07.2011 TW 100212727
(43) Date of publication of application: 16.01.2013
(73) Proprietor: Yih Shwei Bolt Industrial Co., Ltd., Tainan City 710 (TW)
(72) Inventor: Wu, Keng Shui, 710 Tainan City (TW)
(74) Representative: Viering, Jentschura & Partner mbB Patent- und Rechtsanwälte

(56) References cited:
- WO-A1-2005/035996
- GB-A- 972 653
- GB-A- 1 120 844
- GB-A- 2 227 540
- GB-A- 191 312 173
- JP-A- 58 118 320
- JP-U- H0 545 218
- US-A- 3 640 326

## Description

### BACKGROUND OF THE INVENTION

### 1. Field of the Invention

This invention relates to a screw, particularly to one having the circumference of a head provided thereon with continuously arranged ribs, able to lower locking resistance for enabling the screw to be quickly locked into a wood piece.

### 2. Description of the Prior Art

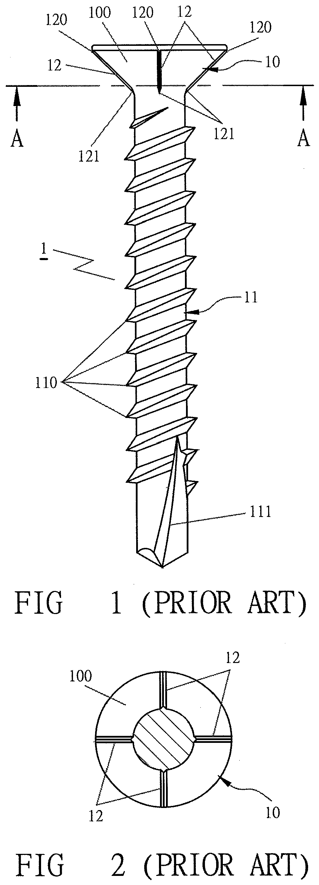

A conventional screw 1, as shown in Fig. 1, is composed of a head 10 and a shank 11. The head 10 is provided with a circumference 100 that is taper-shaped or arc-shaped and has its surface provided thereon with a plurality of ribs 12 distributed matching the shape of the circumference 100. The ribs 12 are respectively formed linearly, that is, each rib 12 is connected into a line from an uppermost end 120 to a lowermost end 121, but the linear ribs 12 can be curved for matching the shape of the circumference 100 or the spiral threads of the shank 11. The shank 11 of the screw 1 is provided with threads 110 and a cutting blade 111.

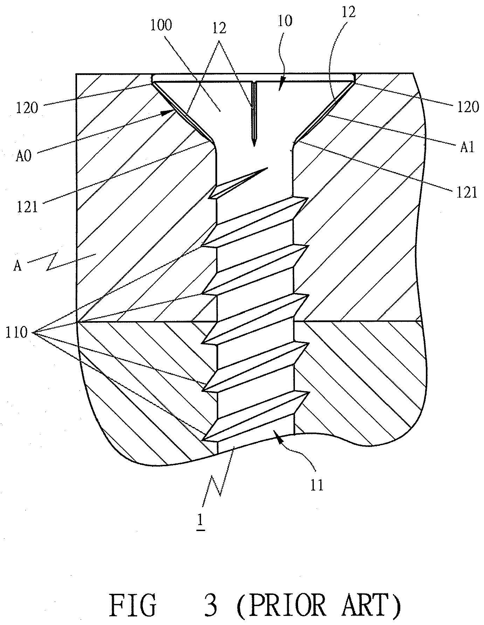

That the ribs 12 of a conventional screw 1 are made into a linear state may be in view of the convenience of the forging process of the head 10; nevertheless, the linear ribs 12 are linear projections formed on the circumference 100 of the head 10. Therefore, although able to excavate a wood piece and advantageous to locking in a wood locking process, yet, the linear ribs 12 will also cause surface resistance. That is to say, when the head 10 of the screw 1 is being locked and embedded into a wood piece (A), the linear ribs 12 will produce surface contact with the wall A1 of the hole AO of the wood piece (A), as shown in Fig. 3, and produce too large a locking resistance, thus failing to smoothly carry out locking of a screw and hence lowering locking velocity.

Further, referring to Fig. 3, when the circumference of the conventional screw 1 contacts with wood (A) or a work piece, the linear ribs 12 on the surface of the circumference 100 will function to cut the wood or the work piece (A) to make a hole AO for receiving the screw head 10. However, since the hole AO for the conventional screw head 10 is formed by having the linear ribs 12 cutting the wood piece (A), therefore, the hole diameter of the wood or the work piece (A) will be enlarged, thus lowering locking force between the screw and the wood or the work piece (A).

The document JP H05 45218 U shows the features of the preamble of claim 1.

### SUMMARY OF THE INVENTION

The objective of this invention is to offer a screw, able to lower resistance when the screw is being locked into a wood piece for enabling the screw to carry out locking smoothly and quickly.

The screw in the present invention has the the features of claim 1. According to some of these features, the screw has the circumference of a head provided thereon with continuously arranged dot-shaped ribs for carrying out point contact, not surface contact, between the ribs and the walls of excavated holes of a wood piece, able to lower locking resistance.

Thus, when the screw head of a screw in accordance with this invention starts being locked in wood or in a work piece, the continuously arranged dot-shaped projections of the screw head will function to cut the wood or the work piece to produce a hole for receiving the screw head and simultaneously, the wall of the hole will be formed with circular grooves by means of the dot projections of the screw head, thus able to keep the hole diameter of the wood as approximate or equal to the outer diameter of the circumference of the screw head as possible for elevating locking force of the screw against wood or a work piece.

The circumference of the head of this invention is provided with a plurality of ribs formed matching with the shape of the circumference.

### BRIEF DESCRIPTION OF DRAWINGS

This invention will be better understood by referring to the accompanying drawings, wherein:
Fig. 1 is a front view of a conventional screw;
Fig. 2 is a cross-sectional view of the line A-A in Fig. 1;
Fig. 3 is a schematic view of the conventional screw locked into a wood piece;
Fig. 4 is a front view of a screw in the present invention, applied to a wood screw;
Fig. 5 is a cross-sectional view of the line B-Bin Fig. 4;
Figs. 5A-5E are schematic views illustrating various preferred embodiments of ribs in the present invention;
Fig. 6 is a cross-sectional view of a head of the wood screw in the present invention;
Figs. 6A-6C are cross-sectional views of various preferred embodiments of a rib member in the present invention;
Fig. 7 is a front view of a screw in the present invention, applied to a self-tapping screw; and
Fig. 8 is cross-sectional view of the screw locked into a wood piece in the present invention.

### DETAILED DESCRIPTION OF THE PREFERRED EMBODIMENT

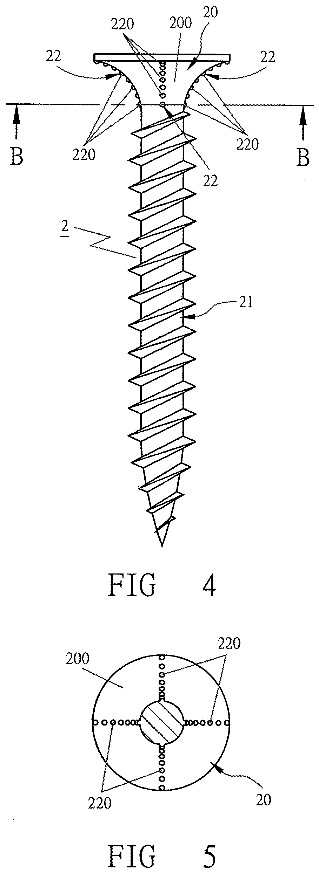

A preferred embodiment of a screw 2 in the present invention, as shown in Figs. 4-5D, includes a head 20 and a shank 21.

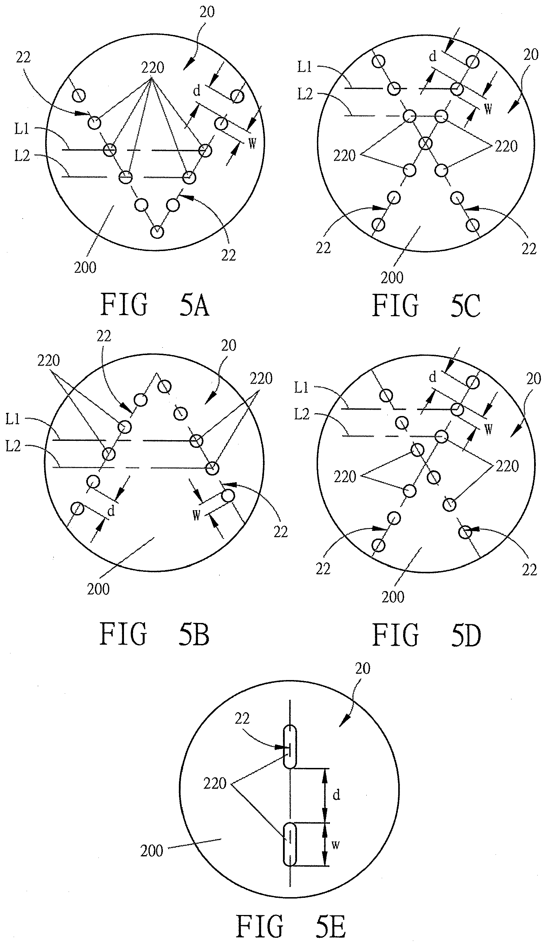

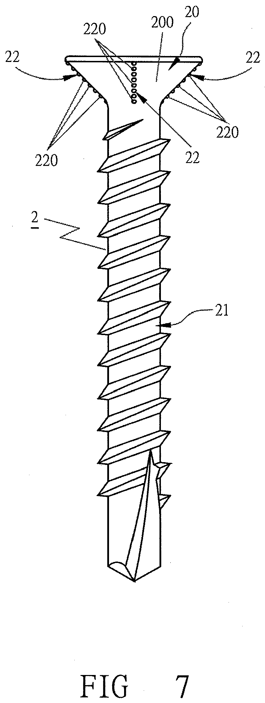

The head 20 is provided with a circumference 200, which can be formed into various shapes, such as an arcuate shape shown in Fig. 4, or a conical shape shown in Fig. 7. The circumference 200 is provided thereon with plural ribs 22, and each rib 22 is composed of a plurality of continuously-arranged projections 220 (or called as dot projections) as shown in Fig. 5. Between every two dot projections 220 is formed a distance (d) that can be smaller than or equivalent to or larger than the outer diameter (r) or the width (w) of the dot projections 220, and the dot projections 220 of two adjacent ribs 22 are arranged in a straight line, as shown in Figs. 5A and 5C, or arranged in a intercrossing condition, as shown in Figs. 5B and 5D.

According to the invention, the dot projections 220 of every two adjacent ribs 22 lie on a same basic line L1 or L2, and the rest can be done in the same manner, and if arranged in a intercrossing condition, the dot projections 220 of every two adjacent ribs 22 are not located on the same basic line L1 or L2, which is not in accordance with the invention and the rest can be deduced accordingly. Each mode of arrangement mentioned above has its own advantages. When the dot projections 220 of every two adjacent ribs 22 are arranged in a intercrossing condition, the wood waste in a hole wall AO, which are not yet excavated by the dot projections 220 of the previous rib 22, will be continuously excavated and removed by the dot projections 220 of the latter ribs 22, thus enhancing locking velocity.

The ribs 22 on the circumference 200 can be provided in a straight line, as shown in Figs. 4 and 5, or in a V shape or an inverted-V shape or a triangular shape, as shown in Figs. 5A and 5B, or in an intersecting or intercrossing X-shape, as shown in Figs. 5C and 5D. In other words, the ribs 22 formed on the circumference 200 of the head 20 can be of various types so long as they can function to excavate a wood piece and remove wood waste.

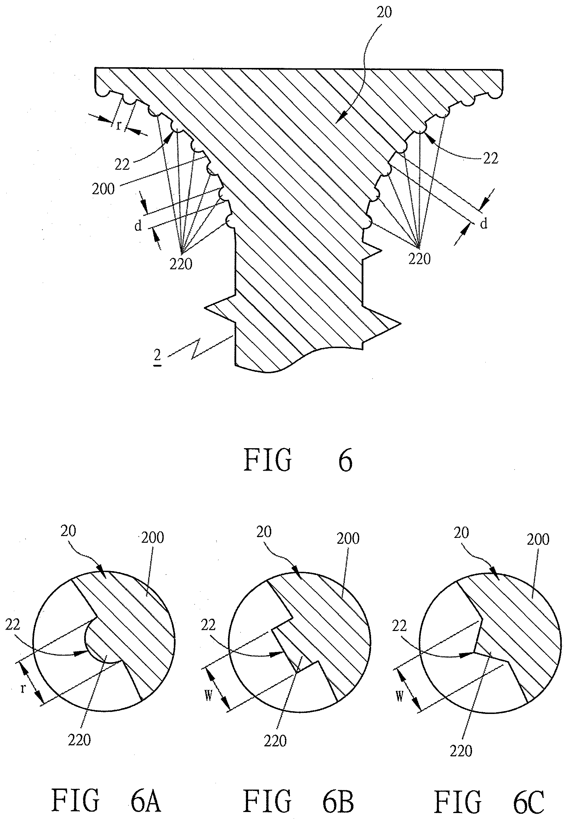

In addition, the dot projections 220 of the ribs 22 can be formed into an arcuate shape or an oval shape, as shown in Figs. 6 and 6A, or a square shape or a rectangular shape, as shown in Figs. 5E and 6B, or into a tapered shape or a conical shape as shown in Fig. 6C, that is to say, the rib members 220 of the ribs 22 can be made into various shapes so long as they can function to excavate a wood piece and remove wood waste.

Further, the screw 2 of this invention can be applied to a wood screw or a self-tapping screw, which has a head provided with a circumference 200 and which makes use of ribs 22 for excavating a wood piece and removing wood waste.

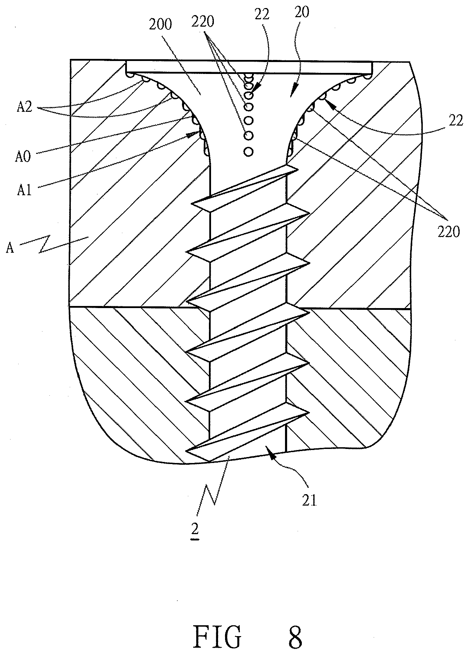

Referring to Fig. 8, when the screw 2 of this invention is used for locking a wood piece (A) and makes use of the ribs 22 on the circumference 200 of the head 20 to excavate the surface of the wood piece (A) and form a hole A1 that matches with the circumference 200, the dot projections 220 will function to carry out excavating toward the hole wall AO of the wood piece (A). Since the dot projections 220 of each rib 22 are arranged continuously, it is able to lower contact resistance between the rib 22 and the hole wall AO of the hole A1 of the wood piece (A). Moreover, the wood waste of the hole wall AO of the wood piece (A), which is not completely excavated and removed by the dot projections 220 of the previous rib 22, will be excavated and removed by the dot projections 220 of the latter rib 22. By so designing, the screw 2 of this invention can be locked into a wood piece with quickness.

In addition, referring to Fig. 8, when circumference 200 of the screw head 20 is being locked into the wood (A) or a work piece, the continuously arranged dot-shaped projections 22 on the circumference 200 of the screw head 20 will begin cutting the wood (A) or the work piece to produce a hole A1 for receiving the screw head 20. Meanwhile, the dot projections 220 of the screw head 20 will produce a circular groove A2 around the wall AO of the hole A1 of the wood or the work piece, letting the diameter of the hole A1 of the wood or the work piece and the outer diameter of the circumference 200 of the screw head 20 kept as approximate or equal in size as possible. Since the diameter of the hole A1 of the wood or the work piece, which is cut by the continuously arranged dot-shaped projections 22, is smaller than that of the hole cut by the linear ribs of the conventional screw shown in Fig. 3; therefore, the locking force of the screw of this invention is much stronger than that of a conventional screw.

While the preferred embodiment of the invention has been described above, it will be recognized and understood that various modifications may be made therein and the appended claims are intended to cover all such modifications that may fall within the scope of the invention.

## Claims

1. A screw (2) at least comprising:
A head (20) and a shank (21), wherein said head (20) is formed with a circumference (200), which circumference is provided thereon with ribs (22), wherein each of said ribs (22) is composed of a plurality of continuously arranged dot-shaped projections (220)with a distance (d) formed between every adjacent two of said dot-shaped projections (220) of each said ribs (22), said ribs (22) producing excavating effect when said circumference is being locked into a wood piece, said ribs (22) enabling said screw to be locked into a wood piece comparatively easily, **characterized in that**
said dot-shaped projections (220) of every adjacent two of said ribs (22) on said circumference of said head (20) are arranged in a straight line, letting said dot-shaped projections of adjacent two of said ribs (22) lie on a same basic line.

2. The screw as claimed in Claim 1, wherein said circumference of said head (20) is arc-shaped.

3. The screw as claimed in Claim 1, wherein said circumference of said head (20) is taper-shaped.

4. The screw as claimed in Claim 1, wherein said dot-shaped projections (220) of said rib (22) on said circumference of said head are arc-shaped, oval-shaped, square-shaped, rectangle-shaped or taper-shaped.

## Patentansprüche

1. Schraube (2) zumindest umfassend:
einen Kopf (20) und einen Schaft (21), wobei der Kopf (20) mit einem Umfang (200) ausgebildet ist, der Umfang mit Rippen (22) darauf versehen ist, wobei jede der Rippen (22) durch eine Mehrzahl von gleichmäßig angeordneten punktförmigen Vorsprünge (220) mit einem Abstand (d) zwischen jeden benachbarten zwei der punktförmigen Vorsprüngen (220) jeder der Rippen (22) ausgebildet ist, wobei die Rippen (22) einen aushebenden Effekt aufweisen, wenn der Umfang in einem Holzstück festgesetzt ist, wobei die Rippen (22) es der Schraube erlauben relativ einfach in ein Holzstück festgesetzt zu werden,
**dadurch gekennzeichnet, dass** die punktförmigen Vorsprünge (220) von jeden benachbarten zwei Rippen (22) auf dem Umgang des Kopfes (20) in einer geraden Linie angeordnet sind, sodass die punktförmigen Vorsprünge von zwei benachbarten Rippen (22) auf einer selben Basislinie liegen.

2. Schraube (2) nach Anspruch 1, wobei der Umfang des Kopfes (20) bogenförmig ist.

3. Schraube (2) nach Anspruch 1, wobei der Umfang des Kopfes (20) kegelförmig ist.

4. Schraube (2) nach Anspruch 1, wobei die punktförmigen Vorsprünge (220) der Rippe (22) auf dem Umfang des Kopfes bogenförmig, ovalförmig, quadratisch, rechteckig oder kegelförmig sind.

## Revendications

1. Vis (2) comprenant au moins :
une tête (20) et une tige (21), ladite tête (20) étant formée d'une circonférence (200), ladite circonférence étant pourvue sur celle-ci de nervures (22), chacune desdites nervures (22) étant composée d'une pluralité de saillies en forme de point agencées de façon continue (220) avec une distance (d) formée entre chaque paire desdites saillies en forme de point (220) de chacune desdites nervures (22), lesdites nervures (22) produisant un effet d'excavation lorsque ladite circonférence est verrouillée dans un élément en bois, lesdites nervures (22) permettant que ladite vis soit verrouillée dans un élément en bois de façon relativement aisée, **caractérisée en ce que** lesdites saillies en forme de point (220) de chaque paire desdites nervures (22) sur ladite circonférence de ladite tête (20) sont agencées en ligne droite, en laissant lesdites saillies en forme de point de deux desdites nervures (22) adjacentes reposer sur une même ligne de base.

2. Vis selon la revendication 1, dans laquelle ladite conférence de ladite tête (20) est de forme arquée.

3. Vis selon la revendication 1, dans laquelle ladite circonférence de ladite tête (20) est de forme conique.

4. Vis selon la revendication 1, dans laquelle lesdites saillies en forme de point (220) de ladite nervure (22) sur ladite circonférence de ladite tête sont de forme arquée, de forme ovale, de forme carrée, de forme rectangulaire ou de forme conique.
